# EUROPEAN PATENT APPLICATION

(11) **EP 1 450 512 A1**
(43) Date of publication of application: **25.08.2004**
(21) Application number: 03290425.2
(22) Date of filing: 21.02.2003
(51) Int. Cl.: H04L 12/24

(54) **Method and apparatus for generating a web-based graphical user interface without additional development**

(71) Applicant: ALCATEL, 75008 Paris (FR)
(72) Inventor: Massimo, Canali, 20059 Vimercate (Milano) (IT); Mussini, Marco, 20133 Milano (IT); Volontè, Stefano, 20052 Monza (Milano) (IT)
(74) Representative: Menzietti, Domenico

(57) **Abstract**

The present invention relates to a method and apparatus for implementing a zero development WEB-based Graphical User Interface, in which an XML model coming from the protocol dependent MIB and automatically translated by the EM-NM MIB model is created. The XML model can be easily managed by an HTTP server and protocol, and displayed by a WEB browser, with no need to add any software.

## Description

The present invention relates to a method and apparatus for implementing a zero development WEB-based Graphical User Interface, in particular for the use in telecommunication systems.

Telecom operators are asking for some solutions to reduce operational costs. Network maintenance has a big impact in the matter.

Usually a maintenance action is done in front of a network device with a dedicated MIB (management information base) browser application used to access and manage the MIB stored inside the device. Hence, a study to optimize the MIB browser application is strongly requested.

The known MIB browser tools available on the market are usually protocol dependent. In fact there are different MIB browser tools able to manage specific independent MIB models provided by the users. Each third-party software browser is protocol dependent. Hence the usage of these browsers needs a customization on the EML (Element Manager Layer) manager system, depending on which browser and which protocol is used.

Therefore the problem to be solved by the present invention is to reduce the development time of a GUI (Graphical User Interface), working as a MIB browser, starting from the EM-NM (Element Manager - Network Manager) interface model.

It is the main object of the present invention to provide a method and apparatus for developing a protocol independent GUI able to manage whatever received incoming message. This procedure is able also to create outgoing messages in the language undestood by the device.

The proposed solution is based on the usage of XML (extensible Markup Language) technology and processing technology as a common data representation to achieve ZIC (Zero Installation Client), web-oriented, zero development cost customizable GUls.

For the purpose, a XML model automatically translated by the network device MIB model is used to create a specific GUI application inside it. This application can be easily managed by a HTTP server and displayed by a web browser, such as Netscape, with no need to add any software. That means that no specific software is required to be pre-installed in the operator terminal computer. Furthermore the same terminal computer can be used for the maintenance of different devices, as the browser is stored in the device and not anymore in the computer.

The main advantage is that the lead-time for GUI development is reduced to zero. The look and feel of presentation is easily customizable without any access to code.

These and further objects are achieved by means of an apparatus and method as described in the attached claims, which are considered an integral part of the present description.

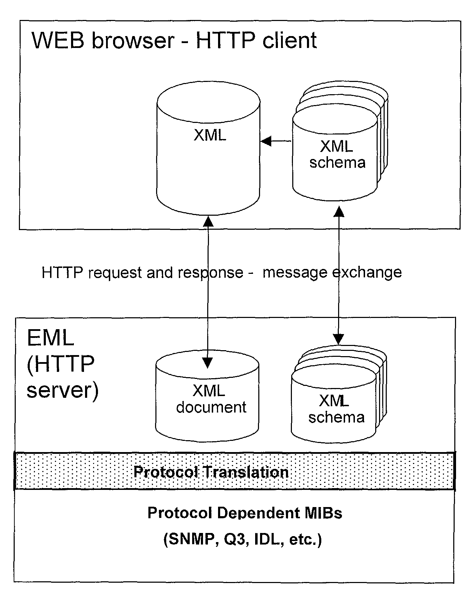

The invention will become fully clear from the following detailed description, given by way of a mere exemplifying and not limiting example, to be read with reference to the attached drawing figure, wherein a block diagram is shown of the data flow between WEB browser and HTTP server system in accordance with the invention.

XML is a known language with shaping capabilities and can be used to support presentations of the same meaning in different forms. The format is added later by the presentation device, according to its capabilities, while the contents and logical structure is specified in the XML data. The XML language is described for example in http://www.w3.org/XML/. In the following some features of XML language are described.
- XML is for structuring data - Structured data includes spreadsheets, address books, configuration parameters, financial transactions, and technical drawings. XML is a set of rules for designing text formats that let you structure your data. XML is not a programming language, and you don't have to be a programmer to use it or learn it. XML makes it easy for a computer to generate data, read data, and ensure that the data structure is unambiguous. XML avoids common pitfalls in language design: it is extensible, platform-independent, and it supports internationalization and localization. XML is fully Unicode-compliant.
- XML looks a bit like HTML - Like HTML, XML makes use of tags (words bracketed by '<' and '>') and attributes (of the form name="value"). While HTML specifies what each tag and attribute means, and often how the text between them will look in a browser, XML uses the tags only to delimit pieces of data, and leaves the interpretation of the data completely to the application that reads
- XML is a family of technologies - The XML family is a growing set of modules that offer useful services to accomplish important and frequently demanded tasks, like the following. Xlink describes a standard way to add hyperlinks to an XML file. XPointer and XFragments are syntaxes in development for pointing to parts of an XML document. An XPointer is a bit like a URL, but instead of pointing to documents on the Web, it points to pieces of data inside an XML file. CSS, the style sheet language, is applicable to XML as it is to HTML. XLS is the advanced language for expressing style sheets.It is based on XSLT, a transformation language used for rearranging, adding and deleting tags and attributes. The DOM is a standard set of function calls for manipulating XML (and HTML) files from a programming language. XML Schemas help developers to precisely define the structures of their own XML-based formats: that is a language to provide means for defining the structure, content and semantics of XML documents; it also expresses shared vocabularies and allow machines to carry out rules made by people (the rules could involve filtering, collection of information, relationship between different data, etc.). There are several more modules and tools available or under development.
- XML is modular - XML allows to define a new document format by combining and reusing other formats. Since two formats developed independently may have elements or attributes with the same name, care must be taken when combining those formats. To eliminate name confusion when combining formats, XML provides a namespace mechanism. XML Schemas is designed to mirror this support for modularity at the level of defining XML document structures, by making it easy to combine two schemas to produce a third which covers a merged document structure.

The idea of the present invention is to have a XML model coming from the protocol dependent MIB (e.g.: a MIB model for SNMP NE, as described below) and automatically translated by the EM-NM MIB model. This model can be easily managed by a HTTP server and protocol, i.e. by using the known Applet mechanism, and displayed by a WEB browser, such as Netscape, with no need to add any software.
The EML acts as HTTP server, preparing the information in a generic XML format in order to permit the upload at the GUI, getting advantages across standard web browsers' functionalities.

The created WEB browser is a generic manager application which:
- displays in a simple way the MIB representation provided by the agent application, implementing the server side of a network device / manager communication channel;
- reports the events which are sent over the channel using the XML-based protocol method;
- it is able to download, from the site of the server application, the XML schema to be used to decode the specific application MIB description. So that, the terminal run-time is actually independent from any specific MIB;
- It allows the operator to give inputs for the objects that support this functionality.

The terminal is based on a specific method to map network management operations, available at the operator interface, in generic XML structured messages over the communication channel.

The structured data can be easily manipulated and retrieved using XML Schemas. As described above, XML Schema is a collection of building blocks (Schema components), which jointly, permit to apply rules to an XML data file.

So the GUI can change the view of the displayed data depending on custom requests and on the particular access channel being used. This makes it possible to access the same network status information from a variety of devices (e.g. PCs, WAP phones, palmtops,..) with a compatible and appropriate amount of detail and with the most suitable presentation format.

In other words, when the EML receives information, it makes a syntactical conversion from the specific protocol model language into a generic XML model (XML document in the figure). The result will be retrieved from an GUI using a standard WEB browser (Internet Explorer, Netscape, etc.). This browser does not request any specific installation tool.

When retrieved, the information will be parsed using a specific XML schema.

This procedure will be helpful also for the development of on demand procedures, such as Performance Monitoring, Alarm Synchronization etc. in which, the handler process, is interested to have a one-shot view of the monitored system, which is not updated thereafter (see also the figure below).

For instance, in case of a MIB model for SNMP NE, using the known SNMP connectionless protocol, a table correlation can be automatically created, showing the relationship automatically and not showing them as unjoined object containers. Moreover, it might be possible to provide a sort of user oriented hierarchical approach (in our environment VPL towards VCL, etc.).

The following SNMP table is then translated in a generic, and more compact, XML:

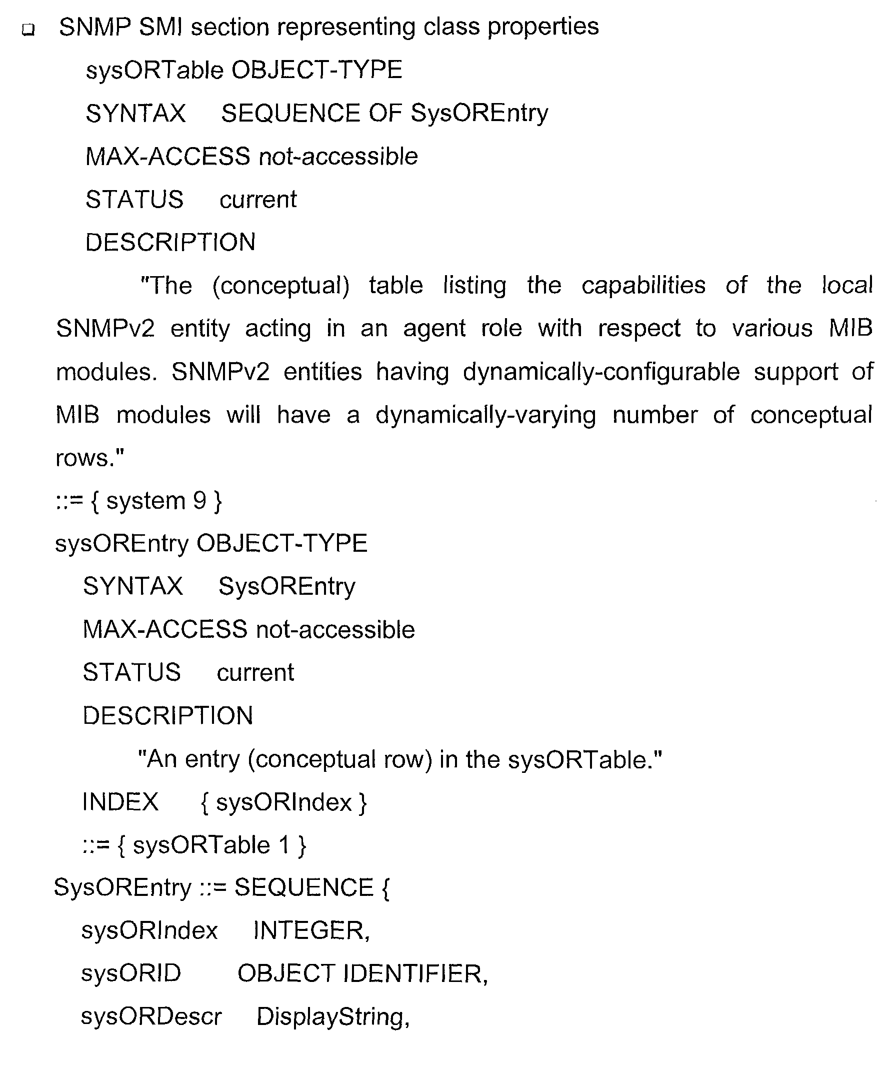

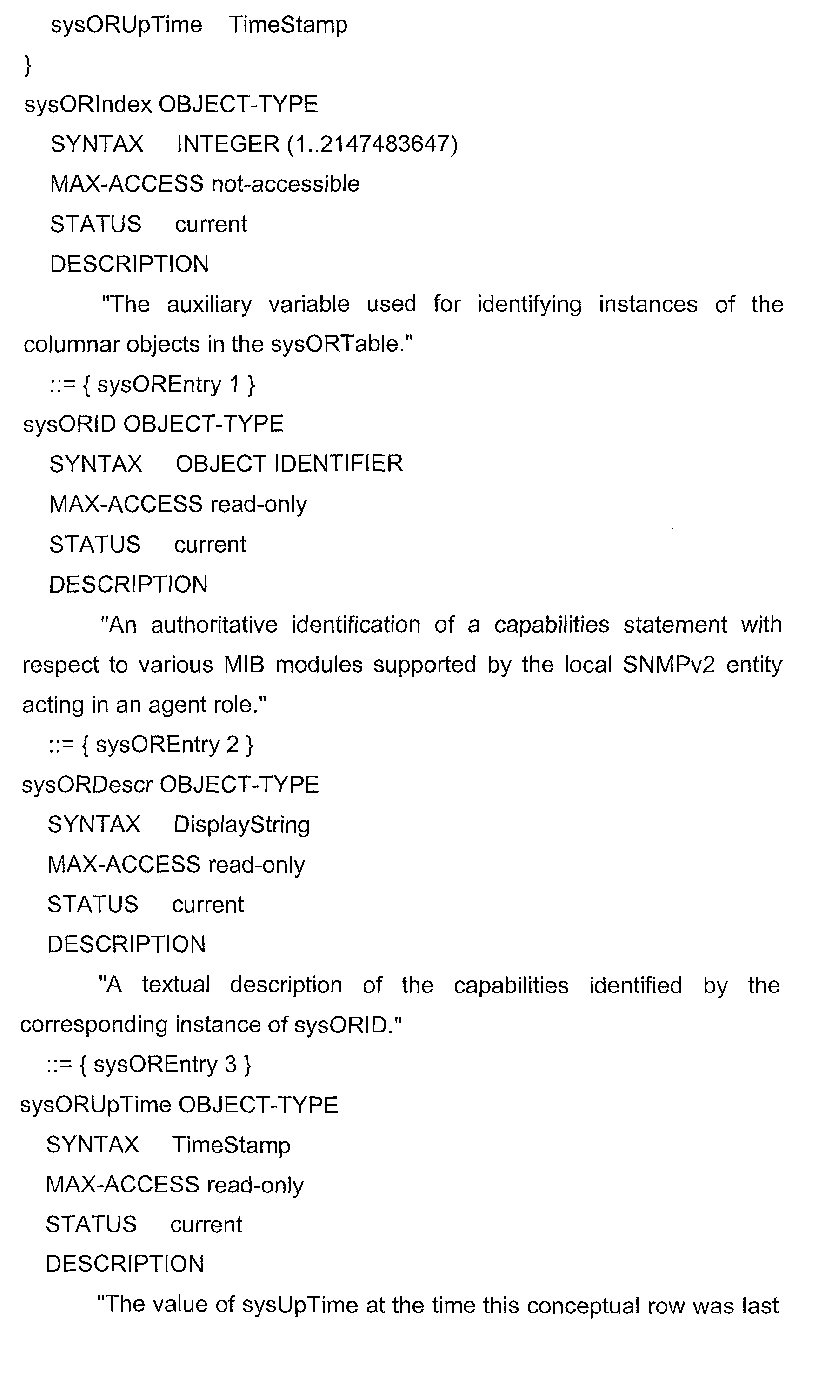

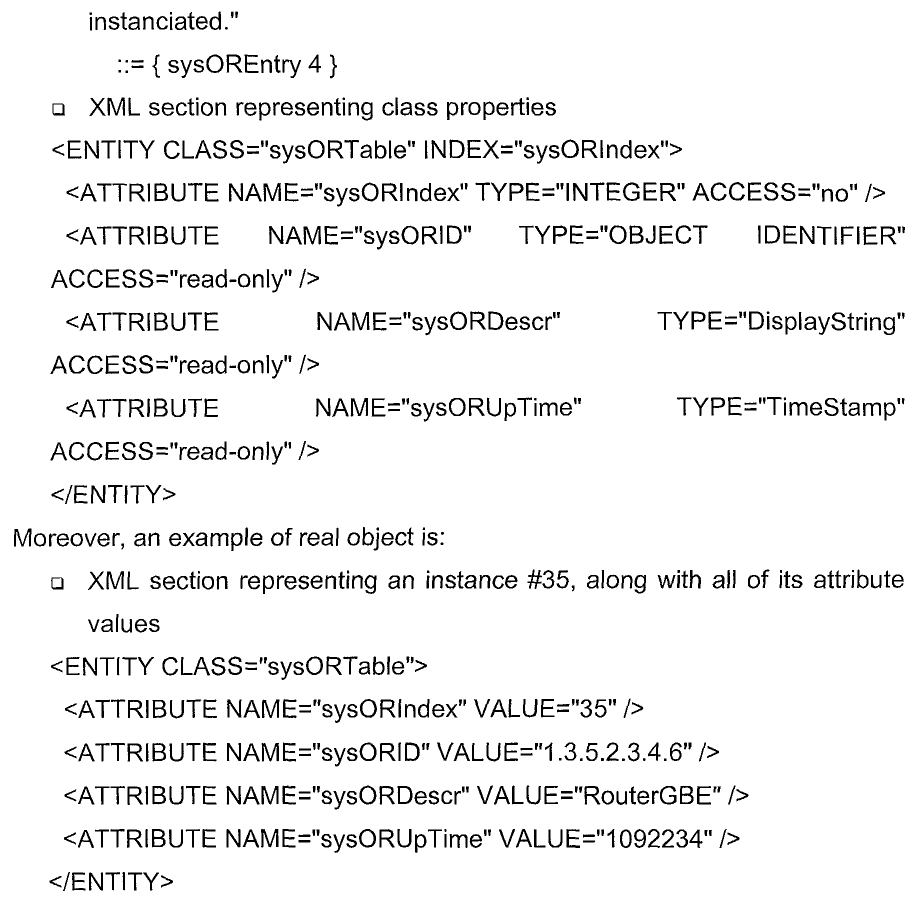

While it remains entirely possible to develop application-specific, graphically sophisticated, dedicated GUI applications for the management of a particular network element via this XML model, with the present invention the client terminal offers at least a basic level of management functionality with no manual effort other than specify the (protocol specific) model itself. Furthermore, management of several NEs using any mix of the supported protocols is possible from within a single web browser session; there is no need to start several applications to do that, not to mention the fact that it is no longer needed to install them first.

From the HTTP server the XML files can be distributed, using HTML mimic, to a specific HTTP client.
This approach gives many advantages:
- the possibility to apply a different logical schemas (starting from a generic one), to analyze the retrieved data;
- no WEB browser pre-installation with ad-hoc software.

If we replace the HTTP server with a controlled Network Entity and HTTP Client with a controller GUI, it is easy to understand the advantages of this invention for the use in TLC network management systems.

Mainly this last point, joined with the possibility to create a specific GUI using JAVA and loaded over the controlled object, permits to control a network entity, independently from the belonging layer, with a Personal Computer or Work Station, equipped with a commercial WEB browser (Netscape, Windows Explorer, Opera, etc.)

This approach may implicitly create an abstraction with the technology that it has to manage. In fact, XML methodology could be easily mapped into another language (WML for interface WAP clients, etc.) technology specific. It gives a great flexibility to the network element control.

Suppose that the operator has to supervise NEs equipped with different software releases: at the moment, he needs to activate his PC with a specific GUI application release, compatible with the NE one.

In the future, this function will be completely decoupled, because of all the necessary software will be designed to be uploaded from the controlled object, saving a lot of time and money.

Moreover, even the upload can be easily speed up because the software could be divided in subparts features (alarms, performance monitoring, etc.) oriented.

Further implementation details will not be described, as the man skilled in the art is able to carry out the invention starting from the teaching of the above description.

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. Method for creating a Graphical User Interface (GUI), starting from a protocol dependent MIB browser and an EM-NM interface model,
**characterized in that** it comprises the following steps:
- at the Element Manager Level (EML), acting as an HTTP server, a syntactical conversion from the specific protocol dependent MIB model language into a generic extensible Markup Language (XML) model is made;
- the said syntactical conversion is retrieved from the GUI through a WEB browser (Internet Explorer, Netscape, etc.) acting as an HTTP client;
- when retrieved, the syntactical conversion is parsed using a specific extensible Markup Language (XML) Schema.

2. Method according to claim 1, **characterized in that** the said WEB browser is a generic manager application which:
- displays the MIB representation provided by an agent application, implementing the said HTTP server side of a network device / manager communication channel;
- reports the events which are sent from said server using the XML-based protocol method;
- downloads, from the HTTP server, the XML Schema to be used to decode the specific application MIB description.

3. A telecommunication system comprising means for implementing the methods of claims 1 or 2, **characterized in that** it comprises controlled Network Entities acting as said HTTP server, and Graphical User Interface (GUI) controller acting as said HTTP client.

4. Computer program comprising computer program code means adapted to perform all the steps of claims 1 or 2, when said program is run on a computer.

5. A computer readable medium having a program recorded thereon, said computer readable medium comprising computer program code means adapted to perform all the steps of claims 1 or 2, when said program is run on a computer.
